(19) Europäisches Patentamt
European Patent Office
Office européen des brevets

(11) **EP 4 036 122 A1**

(12) **EUROPEAN PATENT APPLICATION**
published in accordance with Art. 153(4) EPC

(43) Date of publication:
**03.08.2022 Bulletin 2022/31**

(21) Application number: **20867710.4**

(22) Date of filing: **14.09.2020**

(51) International Patent Classification (IPC):
**C08C 19/20** (2006.01)    **H01M 4/60** (2006.01)

(52) Cooperative Patent Classification (CPC):
**C08C 19/20; H01M 4/60;** Y02E 60/10

(86) International application number:
**PCT/JP2020/034673**

(87) International publication number:
**WO 2021/060043 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2019   JP 2019176319**

(71) Applicant: **ADEKA CORPORATION**
**Arakawa-ku**
**Tokyo**
**116-8554 (JP)**

(72) Inventors:
• **TAKENOUCHI, Hiromi**
  **Tokyo 116-8554 (JP)**
• **KAKIAGE, Kenji**
  **Tokyo 116-8554 (JP)**
• **NOHARA, Yuta**
  **Tokyo 116-8554 (JP)**
• **AOYAMA, Yohei**
  **Tokyo 116-8554 (JP)**

(74) Representative: **Müller-Boré & Partner**
**Patentanwälte PartG mbB**
**Friedenheimer Brücke 21**
**80639 München (DE)**

(54) **SULFUR-MODIFIED POLYACRYLONITRILE**

(57)    The present invention provides a sulfur-modified polyacrylonitrile, which has a content of sulfur of from 30 mass% to 50 mass%, and satisfies the expression: $4,500 < 140 \times x - y < 5,200$ when the content (mass%) of sulfur is represented by "x", and an average CT value of the sulfur-modified polyacrylonitrile in X-ray CT is represented by "y".

EP 4 036 122 A1

## Description

### Technical Field

The present invention relates to a sulfur-modified polyacrylonitrile suitably used as an electrode active material for a non-aqueous electrolyte secondary battery, a non-aqueous electrolyte secondary battery using the same, and to a manufacturing method therefor. The present invention also relates to a method of selecting a sulfur-modified polyacrylonitrile excellent as an electrode active material, and to a method of examining performance of a sulfur-modified polyacrylonitrile as an electrode active material.

### Background Art

A lithium ion secondary battery has been widely used as a power source for a portable electronic device, such as a portable personal computer, a handy video camera, or an information terminal, because the lithium ion secondary battery is compact and lightweight, has a high energy density, has a high capacity, and can be charged and discharged repeatedly. In addition, an electric vehicle using the lithium ion secondary battery, and a hybrid car utilizing electric power in part of its motive power have been put into practical use in view of environmental problems.

A sulfur-modified polyacrylonitrile, which is obtained by subjecting a mixture of polyacrylonitrile and sulfur to heat treatment under a non-oxidizing atmosphere, is known as an electrode active material which has a high charge-discharge capacity and in which the charge-discharge capacity is less reduced along with repetition of charging and discharging (hereinafter sometimes referred to as "cycle characteristics") (see, for example, Patent Literatures 1 to 3). An organosulfur electrode active material has been investigated mainly as an electrode active material of a positive electrode, but has also been investigated as an electrode active material of a negative electrode (see, for example, Patent Literature 3).

Meanwhile, X-ray computed tomography (CT), which is obtained by irradiating a sample with X-rays, enables recognition of an internal structure, a defective shape, and the like of the sample in a non-destructive manner, and is hence widely used mainly in the medical field. In the battery field, the X-ray CT is used for, for example, observation of peeling or escaping of an electrode active material mixture layer of an electrode and deformation of a current collector, such as wrinkle (see, for example, Patent Literature 4).

### Citation List

#### Patent Literature

[PTL 1] WO 2010/044437 A1
[PTL 2] JP 2014-022123 A
[PTL 3] JP 2014-096327 A
[PTL 4] JP 2008-277031 A

### Summary of Invention

#### Technical Problem

In the secondary battery field, an ability to perform charging and discharging at a large current is referred to as "rate characteristics". In a lithium ion secondary battery to be used for an automobile, discharging at a large current is required at the time of starting and acceleration, and a secondary battery excellent in rate characteristics is required. The sulfur-modified polyacrylonitrile may cause a reduction in charge-discharge capacity after repetition of discharging at a large current, and there is an issue in that an improvement in rate characteristics is required.

#### Solution to Problem

The inventors of the present invention made extensive investigations on the above-mentioned issue, and as a result, found that, when a sulfur-modified polyacrylonitrile in which a CT value obtained through X-ray CT measurement falls within a specific numerical range is used as an electrode active material, a lithium ion secondary battery excellent in rate characteristics is obtained. Thus, the inventors completed the present invention. That is, according to one embodiment of the present invention, there is provided a sulfur-modified polyacrylonitrile, which has a content of sulfur of from 30 mass% to 50 mass%, and satisfies the following expression (1) when the content (mass%) of sulfur is represented by "x", and an average CT value of the sulfur-modified polyacrylonitrile in X-ray CT is represented by "y".

$$4,500 < 140 \times x - y < 5,200 \qquad (1)$$

Advantageous Effects of Invention

When the sulfur-modified polyacrylonitrile of the present invention is used as an electrode active material, a non-aqueous electrolyte secondary battery excellent in rate characteristics can be provided. In addition, by simplified methods according to the present invention each comprising measuring a sulfur-modified polyacrylonitrile for a content of sulfur and an X-ray CT value, a sulfur-modified polyacrylonitrile excellent as an electrode active material for a non-aqueous electrolyte secondary battery can be determined.

Description of Embodiments

In the present invention, a sulfur-modified polyacrylonitrile is a compound obtained by subjecting polyacrylonitrile and elemental sulfur to heat treatment in a non-oxidizing atmosphere. Polyacrylonitrile may be a homopolymer of acrylonitrile, or may be a copolymer of acrylonitrile and different monomer(s). In the case where polyacrylonitrile is the copolymer, battery performance is reduced when the content of acrylonitrile is reduced. Accordingly, the content of acrylonitrile in the copolymer is preferably at least 90 mass% or more. Examples of the different monomer(s) include acrylic acid, vinyl acetate, N-vinyl formamide, and N, N'-methylenebis(acrylamide).

The weight average molecular weight of polyacrylonitrile to be used in the present invention is not particularly limited, and commercially available polyacrylonitrile may be used.

The sulfur-modified polyacrylonitrile of the present invention has a feature of having a content of sulfur of from 30 mass% to 50 mass% and satisfying the following expression (1) when the content (mass%) of sulfur is represented by "x", and an average CT value of the sulfur-modified polyacrylonitrile in X-ray CT is represented by "y".

$$4,500 < 140 \times x - y < 5,200 \qquad (1)$$

The content of sulfur in the sulfur-modified polyacrylonitrile of the present invention is from 30 mass% to 50 mass%. When the content of sulfur is less than 30 mass%, a high charge-discharge capacity may not be obtained. When the content of sulfur is more than 50 mass%, excellent cycle characteristics may not be obtained. The content of sulfur in the sulfur-modified polyacrylonitrile of the present invention is preferably from 35 mass% to 45 mass%. The content of sulfur in an organosulfur electrode active material may be calculated from analysis results using a CHN analyzer capable of analyzing sulfur and oxygen.

In the present invention, the "CT value" refers to the X-ray absorption coefficient of a substance to be measured in terms of a relative value with respect to a reference substance, the relative value being a value when water and air are used as reference substances and the X-ray absorption coefficients of water and air are defined as 0 and -1,000, respectively. In addition, the "average CT value" refers to an average of CT values of the substance to be measured.

An electrode including the sulfur-modified polyacrylonitrile of the present invention as an electrode active material has excellent rate characteristics. The "rate characteristics" refer to a ratio of a discharge capacity in the case of discharging at a high current to a discharge capacity in the case of discharging at a low current, and higher rate characteristics indicate that a battery can be used even when the battery is discharged at a larger current. For example, a large current is temporality required for rapid acceleration at the time of starting of an automobile, and hence it is important for a battery to have higher rate characteristics. When the sulfur-modified polyacrylonitrile does not satisfy the expression (1), excellent rate characteristics are not obtained. Further, the sulfur-modified polyacrylonitrile of the present invention preferably satisfies the following expression (2), and more preferably satisfies the following expression (3).

$$4,600 < 140 \times x - y < 5,150 \qquad (2)$$

$$4,700 < 140 \times x - y < 5,100 \qquad (3)$$

In order to evaluate the rate characteristics of an electrode active material, it is required to produce an electrode comprising the electrode active material, assemble a non-aqueous electrolyte secondary battery including the electrode, and actually repeat charging and discharging, which requires many procedures and time. However, according to the present invention, the rate characteristics can be expected simply in a short time by measuring the content of sulfur and the CT value of the sulfur-modified polyacrylonitrile, and determining whether or not the expression (1) is satisfied. Accordingly, the present invention is useful for process control, shipping selection, and the like in the manufacturing of the sulfur-modified polyacrylonitrile.

The sulfur-modified polyacrylonitrile of the present invention preferably has a particle diameter of from 0.1 $\mu$m to 50 $\mu$m. The particle diameter is a diameter on a volume basis, and the diameters of secondary particles are measured by a laser diffraction light scattering method. In the present invention, the "average particle diameter" refers to a 50% particle diameter (D50) measured by a laser diffraction light scattering method. It requires great labor to reduce the average particle diameter of the sulfur-modified polyacrylonitrile to less than 0.1 $\mu$m, but a further improvement in battery performance cannot be expected. When the average particle diameter of the sulfur-modified polyacrylonitrile is more than 50 $\mu$m, peeling or the like of an electrode mixture layer may be liable to occur. The sulfur-modified polyacrylonitrile of the present invention has an average particle diameter of more preferably from 0.5 $\mu$m to 30 $\mu$m, still more preferably from 1 $\mu$m to 20 $\mu$m.

The sulfur-modified polyacrylonitrile of the present invention is obtained by a manufacturing method including a heat treatment step of subjecting polyacrylonitrile and elemental sulfur to heat treatment. The blending ratio between polyacrylonitrile and elemental sulfur is as follows: preferably from 100 parts by mass to 1,500 parts by mass, more preferably from 150 parts by mass to 1,000 parts by mass of elemental sulfur with respect to 100 parts by mass of polyacrylonitrile. Polyacrylonitrile and elemental sulfur are each preferably formed of powder because uniform modification with sulfur is achieved. When the particle diameters of polyacrylonitrile and elemental sulfur are too small, it requires great labor to reduce polyacrylonitrile and elemental sulfur to fine particle diameters. When the particle diameters of polyacrylonitrile and elemental sulfur are too large, modification with sulfur becomes insufficient. Accordingly, the particle diameters of polyacrylonitrile and elemental sulfur are each preferably from 1 $\mu$m to 1,000 $\mu$m in terms of an average particle diameter.

Polyacrylonitrile and elemental sulfur may be directly subjected to the heat treatment, but the manufacturing method may include, before the heat treatment step, a mixing step of mixing polyacrylonitrile and elemental sulfur in advance because uniform modification with sulfur is achieved.

A temperature of the heat treatment in the heat treatment step is preferably from 250°C to 550°C, more preferably from 350°C to 450°C. In the heat treatment step, it is preferred that polyacrylonitrile and elemental sulfur, or an intermediate of the sulfur-modified polyacrylonitrile and sulfur be heated while being mixed with each other so that uniform modification with sulfur is achieved.

The heat treatment is performed under a non-oxidizing atmosphere. The non-oxidizing atmosphere may be an atmosphere in which a gas phase has an oxygen concentration of 5 vol% or less, preferably 2 vol% or less, more preferably an atmosphere substantially free of oxygen, for example, an inert gas atmosphere of nitrogen, helium, argon, or the like, or a sulfur gas atmosphere.

Hydrogen sulfide to be generated through the heat treatment is preferably discharged to an outside of a heating container. In order to discharge hydrogen sulfide, it is appropriate to introduce an inert gas into the heating container and discharge hydrogen sulfide together with the inert gas. When a sulfur vapor outflows together with hydrogen sulfide, the reaction ratio between polyacrylonitrile and elemental sulfur changes, and hence it is preferred that sulfur having outflowed be refluxed to the heating container or sulfur in the outflowed amount be added thereto.

The sulfur-modified polyacrylonitriles having the comparable contents of sulfur may have different CT values. This is considered to result from a difference in internal structure between the sulfur-modified polyacrylonitriles, and relate to uniformity in modification with sulfur. When polyacrylonitrile and elemental sulfur are mixed more satisfactorily during the heat treatment, a more satisfactory sulfur-modified polyacrylonitrile satisfying the expression (1) is obtained. In particular, the heat treatment is preferably performed with a rotating-type heating container. A satisfactory sulfur-modified polyacrylonitrile is obtained when mixing is performed during the heat treatment, rather than when mixing is not performed during the heat treatment. In addition, of the cases in which mixing is performed, a satisfactory sulfur-modified polyacrylonitrile is obtained when the rotating-type heating container is used, rather than when stirring mixing with a stirring blade, such as a screw blade or a helical ribbon blade, is used. This is presumably because, while a raw material or the intermediate of the sulfur-modified polyacrylonitrile is powder, the mixing is performed insufficiently in the stirring mixing, but in the rotating-type heating container, the container is inclined by a specific angle, and hence the powder is inclined by the rotation of the container and mixed while moving in an inclination direction under its own weight, with the result that the mixing is performed sufficiently.

The sulfur-modified polyacrylonitrile obtained through the heat treatment may include free sulfur (elemental sulfur), which adversely affects the battery performance, and hence a method of manufacturing the sulfur-modified polyacrylonitrile of the present invention preferably includes, after the heat treatment step, a desulfurization step of removing free sulfur. A method for the desulfurization is exemplified by a heating method and a solvent washing method.

After the desulfurization step, the sulfur-modified polyacrylonitrile may be pulverized as required. In the pulverization of the sulfur-modified polyacrylonitrile, a known pulverizer may be used, and examples of the known pulverizer include: medium stirring mills, such as a sand mill, an attritor, and a bead mill; container-drive type mills each including a ball or a rod as a medium, such as a rotation mill, a vibration mill, and a planetary mill; and a jet mill, a roll mill, a hammer mill, a pin mill, and a cyclone mill.

The sulfur-modified polyacrylonitrile of the present invention has a high charge-discharge capacity and excellent cycle characteristics as an electrode active material, and hence can be suitably used as an electrode active material of an electrode for a non-aqueous electrolyte secondary battery. Specifically, the sulfur-modified polyacrylonitrile of the present invention is provided on a current collector to form an electrode mixture layer including the sulfur-modified polyacrylonitrile. The electrode mixture layer is formed by applying a slurry prepared by adding the sulfur-modified polyacrylonitrile of the present invention, a binder, and a conductive assistant to a solvent onto the current collector, followed by drying.

A binder known as a binder for an electrode may be used as the binder, and examples thereof include a styrene-butadiene rubber, a butadiene rubber, polyethylene, polypropylene, polyamide, polyamide imide, polyimide, polyacrylonitrile, polyurethane, polyvinylidene fluoride, polytetrafluoroethylene, an ethylene-propylene-diene rubber, a fluorine rubber, a styrene-acrylic acid ester copolymer, an ethylene-vinyl alcohol copolymer, an acrylonitrile butadiene rubber, a styrene-isoprene rubber, polymethyl methacrylate, polyacrylate, polyvinyl alcohol, polyvinyl ether, carboxymethyl cellulose, sodium carboxymethyl cellulose, methyl cellulose, a cellulose nanofiber, polyethylene oxide, starch, polyvinylpyrrolidone, polyvinyl chloride, and polyacrylic acid.

As the binder, an aqueous binder is preferred because of its low environmental load and excellent binding strength, and a styrene-butadiene rubber, sodium carboxymethyl cellulose, and polyacrylic acid are more preferred. Those binders may be used alone or in combination thereof. The content of the binder in the slurry is preferably from 1 part by mass to 30 parts by mass, more preferably from 1.5 parts by mass to 20 parts by mass with respect to 100 parts by mass of the sulfur-modified polyacrylonitrile of the present invention.

A conductive assistant known as conductive assistant for an electrode may be used as the conductive assistant, and specific examples thereof include: carbon materials, such as natural graphite, artificial graphite, carbon black, ketjen black, acetylene black, channel black, furnace black, lamp black, thermal black, a carbon nanotube, a vapor grown carbon fiber (VGCF), flake graphite, exfoliated graphite, graphene, fullerene, and needle coke; metal powders, such as aluminum powder, nickel powder, and titanium powder; conductive metal oxides, such as zinc oxide and titanium oxide; and sulfides, such as $La_2S_3$, $Sm_2S_3$, $Ce_2S_3$, and $TiS_2$. The particle diameter of the conductive assistant is preferably from 0.0001 $\mu$m to 100 $\mu$m, more preferably from 0.01 $\mu$m to 50 $\mu$m in terms of an average particle diameter. The content of the conductive assistant in the slurry is generally from 0.1 part by mass to 50 parts by mass, preferably from 1 part by mass to 30 parts by mass, more preferably from 2 parts by mass to 20 parts by mass with respect to 100 parts by mass of the sulfur-modified polyacrylonitrile of the present invention.

Examples of the solvent for preparing the slurry to be used in the present invention include propylene carbonate, ethylene carbonate, diethyl carbonate, dimethyl carbonate, ethylmethyl carbonate, 1,2-dimethoxyethane, 1,2-diethoxyethane, acetonitrile, propionitrile, tetrahydrofuran, 2-methyltetrahydrofuran, dioxane, 1,3-dioxolane, nitromethane, N-methylpyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, tetrahydrofuran, dimethyl sulfoxide, sulfolane, $\gamma$-butyrolactone, water, and an alcohol. The usage amount of the solvent may be adjusted in accordance with a method of applying the slurry. For example, in the case of a doctor blade method, the usage amount is preferably from 20 parts by mass to 300 parts by mass, more preferably from 30 parts by mass to 200 parts by mass with respect to 100 parts by mass of a total amount of the sulfur-modified polyacrylonitrile, the binder, and the conductive assistant.

The slurry may include different component(s) in addition to the above-mentioned components. Examples of the other component include a viscosity modifier, a reinforcing material, and an antioxidant.

A method of preparing the slurry is not particularly limited, but for example, an ordinary ball mill, a sand mill, a bead mill, a pigment disperser, a mortar machine, an ultrasonic disperser, a homogenizer, a rotation/revolution mixer, a planetary mixer, Fill Mix, Jet Paster, or the like may be used.

A conductive material, such as titanium, a titanium alloy, aluminum, an aluminum alloy, copper, nickel, stainless steel, nickel-plated steel, or carbon, is used as the current collector. The surfaces of those conductive materials may each be coated with carbon. The current collector has a foil shape, a sheet shape, a mesh shape, or the like. Of those options, aluminum is preferred from the viewpoints of conductivity and cost, and a foil shape is preferred out of the shapes. In the case of a foil shape, a foil thickness is generally from 1 $\mu$m to 100 $\mu$m.

The method of applying the slurry onto the current collector is not particularly limited, and various methods, such as a die coater method, a comma coater method, a curtain coater method, a spray coater method, a gravure coater method, a flexo coater method, a knife coater method, a doctor blade method, a reverse roll method, a brush coating method, and a dip method, may be used. Of those, a die coater method, a doctor blade method, and a knife coater method are preferred because these methods can each be adjusted to the physical properties such as a viscosity and the drying property of the slurry to obtain an application layer with a satisfactory surface state. The slurry may be applied onto only one surface or both surfaces of the current collector. When the slurry is applied onto both surfaces of the current collector, the slurry may be applied sequentially onto one surface at a time, or may be applied simultaneously onto both surfaces at a time. In addition, the slurry may be applied onto the surface of the current collector continuously or intermittently, or may be applied thereonto in a stripe pattern. The thickness, the length, and the width of the application layer may be appropriately determined depending on the size of a battery.

A method of drying the slurry having been applied onto the current collector is not particularly limited, and various methods, such as drying with warm air, hot air, or low-humidity air, vacuum drying, still standing in a heating furnace or the like, irradiation with far infrared rays, infrared rays, electron beams, or the like, may each be used. With the drying, a volatile component such as the solvent volatilizes from the application film of the slurry, and thus the electrode mixture layer is formed on the current collector. After that, the electrode may be subjected to press processing as required.

An electrode of the present invention can be used for, without particular limitations, a non-aqueous power storage device including a non-aqueous electrolyte. Examples of the power storage device include a primary battery, a secondary battery, an electric double layer capacitor, and a lithium ion capacitor. The non-aqueous electrolyte may be any one of a liquid electrolyte, a gel electrolyte, a solid electrolyte, and the like. The electrode of the present invention can be suitably used for a non-aqueous electrolyte secondary battery, and can be more suitably used for a lithium ion secondary battery. The electrode of the present invention can be used as a positive electrode or a negative electrode of the power storage device.

In general, the non-aqueous electrolyte secondary battery includes a positive electrode, a negative electrode, a non-aqueous electrolyte, and a separator. When the electrode of the present invention is used as the positive electrode, an electrode including a known negative electrode active material may be used as the negative electrode. When the electrode of the present invention is used as the negative electrode, an electrode including a known positive electrode active material may be used as the positive electrode. A negative electrode in the case of using the electrode of the present invention as the positive electrode, and a positive electrode in the case of using the electrode of the present invention as the negative electrode are each referred to as "counter electrode".

Examples of the known negative electrode active material, which is used when the electrode comprising the sulfur-modified polyacrylonitrile of the present invention as the electrode active material is used as a positive electrode, and the counter electrode is a negative electrode, include, in the case of a lithium ion secondary battery, natural graphite, artificial graphite, non-graphitizable carbon, graphitizable carbon, lithium, a lithium alloy, silicon, a silicon alloy, silicon oxide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide, and as well, composite oxides, such as $LiVO_2$, $Li_2VO_4$, and $Li_4Ti_5O_{12}$. Those negative electrode active materials may be used alone or in combination thereof.

In the case of a sodium ion secondary battery, the negative electrode active material free of a lithium atom or the negative electrode active material in which a lithium atom is replaced with a sodium atom among the above-mentioned negative electrode active materials in the case of a lithium ion secondary battery may be used. When the negative electrode active material is lithium or a lithium alloy, or sodium or a sodium alloy, the negative electrode active material in itself may be used as an electrode without use of the current collector.

Examples of the known positive electrode active material, which is used when the electrode comprising the sulfur-modified polyacrylonitrile of the present invention as the electrode active material is used as a negative electrode, and the counter electrode is a positive electrode, include a composite oxide of lithium and a transition metal, a lithium-containing transition metal phosphate compound, and a lithium-containing silicate compound. A transition metal in the composite oxide of lithium and a transition metal is preferably, for example, vanadium, titanium, chromium, manganese, iron, cobalt, nickel, or copper. Specific examples of the composite oxide of lithium and a transition metal include: composite oxides of lithium and cobalt, such as $LiCoO_2$; composite oxides of lithium and nickel, such as $LiNiO_2$; composite oxides of lithium and manganese, such as $LiMnO_2$, $LiMn_2O_4$, and $Li_2MnO_3$; and compounds obtained by substituting part of primary transition metal atoms of these composite oxides of lithium and transition metals with another metal, such as aluminum, titanium, vanadium, chromium, manganese, iron, cobalt, lithium, nickel, copper, zinc, magnesium, gallium, or zirconium. Specific examples of the substituted compounds include $Li_{1.1}Mn_{1.8}Mg_{0.1}O_4$, $Li_{1.1}Mn_{1.85}Al_{0.05}O_4$, $LiNi_{0.5}Co_{0.2}Mn_{0.3}O_2$, $LiNi_{0.8}Co_{0.1}Mn_{0.1}O_2$, $LiNi_{0.5}Mn_{0.5}O_2$, $LiNi_{0.80}Co_{0.17}Al_{0.03}O_2$, $LiNi_{0.80}Co_{0.15}Al_{0.05}O_2$, $LiNi_{1/3}Co_{1/3}Mn_{1/3}O_2$, $LiNi_{0.6}Co_{0.2}Mn_{0.2}O_2$, $LiMn_{1.8}Al_{0.2}O_4$, $LiMn_{1.5}Ni_{0.5}O_4$, and $Li_2MnO_3$-$LiMO_2$ (M=Co, Ni, or Mn). A transition metal in the lithium-containing transition metal phosphate compound is preferably vanadium, titanium, manganese, iron, cobalt, nickel, or the like, and specific examples of the compound include: iron phosphate compounds, such as $LiFePO_4$ and $LiMn_xFe_{1-x}PO_4$; cobalt phosphate compounds, such as $LiCoPO_4$; compounds obtained by substituting part of primary transition metal atoms of these lithium-containing transition metal phosphate compounds with another metal, such as aluminum, titanium, vanadium, chromium, manganese, iron, cobalt, lithium, nickel, copper, zinc, magnesium, gallium, zirconium, niobium; and vanadium phosphate compounds, such as $Li_3V_2(PO_4)_3$. An example of the lithium-containing silicate compound is $Li_2FeSiO_4$. Those compounds may be used alone or in combination thereof.

The counter electrode may be produced by replacing the above-mentioned sulfur-modified polyacrylonitrile of the present invention with the above-mentioned known negative electrode active material or known positive electrode active material.

As a non-aqueous electrolyte of the non-aqueous electrolyte secondary battery of the present invention, there are given, for example: a liquid electrolyte obtained by dissolving an electrolyte in an organic solvent; a gel polymer electrolyte in which an electrolyte is dissolved in an organic solvent and gelation is performed with a polymer; a pure polymer electrolyte which is free of an organic solvent and in which an electrolyte is dispersed in a polymer; a hydride-based solid electrolyte; and an inorganic solid electrolyte.

In the case of the lithium ion secondary battery, for example, a hitherto known lithium salt is used as the supporting electrolyte to be used in the liquid electrolyte and the gel polymer electrolyte. Examples thereof include $LiPF_6$, $LiBF_4$, $LiAsF_6$, $LiCF_3SO_3$, $LiCF_3CO_2$, $LiN(CF_3SO_2)_2$, $LiN(C_2F_5SO_2)_2$, $LiN(SO_2F)_2$, $LiC(CF_3SO_2)_3$, $LiB(CF_3SO_3)_4$, $LiB(C_2O_4)_2$, $LiBF_2(C_2O_4)$, $LiSbF_6$, $LiSiF_5$, LiSCN, $LiClO_4$, LiCl, LiF, LiBr, LiI, $LiAlF_4$, $LiAlCl_4$, $LiPO_2F_2$, and derivatives thereof. Of those, one or more kinds selected from the group consisting of $LiPF_6$, $LiBF_4$, $LiClO_4$, $LiAsF_6$, $LiCF_3SO_3$ or derivatives thereof, $LiN(CF_3SO_2)_2$, $LiN(C_2F_5SO_2)_2$, $LiN(SO_2F)_2$, and $LiC(CF_3SO_2)_3$ or derivatives thereof are preferably used. The content of the supporting electrolyte in the liquid electrolyte or the gel polymer electrolyte is preferably from 0.5 mol/L to 7 mol/L, more preferably from 0.8 mol/L to 1.8 mol/L.

Examples of the supporting electrolyte to be used in the pure polymer electrolyte include, in the case of the lithium ion secondary battery, $LiN(CF_3SO_2)_2$, $LiN(C_2F_5SO_2)_2$, $LiN(SO_2F)_2$, $LiC(CF_3SO_2)_3$, $LiB(CF_3SO_3)_4$, and $LiB(C_2O_4)_2$.

Examples of the hydride-based solid electrolyte include $LiBH_4$, $LiBH_4$-LiI, $LiBH_4$-$P_2S_5$, $LiAlH_4$, and $Li_3AlH_6$.

Examples of the inorganic solid electrolyte include, in the case of the lithium ion secondary battery: phosphoric acid-based materials, such as $Li_{1+x}A_xB_{2-x}(PO_4)_3$ (A=Al, Ge, Sn, Hf, Zr, Sc, or Y, B=Ti, Ge, or Zn, 0<x<0.5), $LiMPO_4$ (M=Mn, Fe, Co, or Ni), and $Li_3PO_4$; composite oxides of lithium, such as $Li_3XO_4$ (X=As or V), $Li_{3+x}A_xB_{1-x}O_4$ (A=Si, Ge, or Ti, B=P, As, or V, 0<x<0.6), $Li_{4+x}A_xSi_{1-x}O_4$ (A=B, Al, Ga, Cr, or Fe, 0<x<0.4) (A=Ni or Co, 0<x<0.1), $Li_{4-3y}Al_ySiO_4$ (0<y<0.06), $Li_{4-2y}Zn_yGeO_4$ (0<y<0.25), $LiAlO_2$, $Li_2BO_4$, $Li_4XO_4$ (X=Si, Ge, or Ti), and lithium titanate ($LiTiO_2$, $LiTi_2O_4$, $Li_4TiO_4$, $Li_2TiO_3$, $Li_2Ti_3O_7$, or $Li_4Ti_5O_{12}$); compounds each containing lithium and a halogen atom, such as LiBr, LiF, LiCl, $LiPF_6$, and $LiBF_4$; compounds each containing lithium and a nitrogen atom, such as LiPON, $LiN(SO_2CF_3)_2$, $LiN(SO_2C_2F_5)_2$, $Li_3N$, and $LiN(SO_2C_3F_7)_2$; crystals each having a perovskite structure having lithium ion conductivity, such as $La_{0.55}Li_{0.35}TiO_3$; crystals each having a garnet-type structure, such as $Li_7$-$La_3Zr_2O_{13}$; glasses, such as $50Li_4SiO_4 \cdot 50Li_3BO_{33}$ and $90Li_3BO_3 \cdot 10Li_2SO_4$; lithium-phosphorus sulfide-based crystals, such as $70Li_2S \cdot 30P_2S_5$, $75Li_2S \cdot 25P_2S_5$, $Li_6PS_5Cl$, $Li_{9.54}Si_{1.74}P_{1.44}S_{11.7}Cl_{0.3}$, $Li_6PS_5P_{1.44}Cl_3$, $Li_{10}GeP_2S_{12}$, and $Li_{3.25}Ge_{0.25}P_{0.75}S_4$; lithium-phosphorus sulfide-based glasses, such as $30Li_2S \cdot 26B_2S_3 \cdot 44LiI$, $50Li_2S \cdot 17P_2S_5 \cdot 33LiBH$, $50Li_2S \cdot 50GeS_2$, $63Li_2S \cdot 36SiS_2 \cdot 1Li_3PO_4$, $57Li_2S \cdot 38SiS_2 \cdot 5Li_4SiO_4$, and $70Li_2S \cdot 50GeS_2$; and glass ceramics, such as $Li_7P_3S_{11}$, $Li_{3.25}P_{0.95}S_4$, $Li_{10}GeP_2S_{12}$, $Li_{9.6}P_3S_{12}$, and $Li_{9.54}Si_{1.74}P_{1.44}S_{11.7}Cl_{0.3}$. The inorganic solid electrolyte may be coated with the gel polymer electrolyte. In addition, when the inorganic solid electrolyte is used, a layer of the gel polymer electrolyte may be arranged between a layer of the inorganic solid electrolyte and an electrode.

In the case of a sodium ion secondary battery, the supporting electrolyte in which a lithium atom is replaced with a sodium atom among the above-mentioned supporting electrolytes in the case of a lithium ion secondary battery may be used.

As the organic solvent to be used for preparation of the liquid non-aqueous electrolyte to be used in the present invention, organic solvents generally used for the liquid non-aqueous electrolyte may be used alone or in combination thereof. Specific examples thereof include a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound.

Of those organic solvents, the saturated cyclic carbonate compound, the saturated cyclic ester compound, the sulfoxide compound, the sulfone compound, and the amide compound each play a role in increasing the dielectric constant of the non-aqueous electrolyte by virtue of having a high specific dielectric constant, and the saturated cyclic carbonate compound is particularly preferred. Examples of such saturated cyclic carbonate compound include ethylene carbonate, 1,2-propylene carbonate, 1,3-propylene carbonate, 1,2-butylene carbonate, 1,3-butylene carbonate, and 1,1-dimethylethylene carbonate. Examples of the saturated cyclic ester compound include γ-butyrolactone, γ-valerolactone, γ-caprolactone, δ-hexanolactone, and δ-octanolactone. Examples of the sulfoxide compound include dimethyl sulfoxide, diethyl sulfoxide, dipropyl sulfoxide, diphenyl sulfoxide, and thiophene. Examples of the sulfone compound include dimethylsulfone, diethylsulfone, dipropylsulfone, diphenylsulfone, sulfolane (also referred as tetramethylene sulfone), 3-methylsulfolane, 3,4-dimethylsulfolane, 3,4-diphenymethylsulfolane, sulfolene, 3-methylsulfolene, 3-ethylsulfolene, and 3-bromomethylsulfolene. Of those, sulfolane and tetramethylsulfolane are preferred. Examples of the amide compound include N-methylpyrrolidone, dimethylformamide, and dimethylacetamide.

Of the above-mentioned organic solvents, the saturated chain carbonate compound, the chain ether compound, the cyclic ether compound, and the saturated chain ester compound can each make battery characteristics, such as an output density, excellent by virtue of having the capability of reducing the viscosity of the non-aqueous electrolyte, the capability of increasing the mobility of an electrolyte ion, and the like. In addition, the saturated chain carbonate compound is particularly preferred because the compound has a low viscosity, and can improve the performance of the non-aqueous electrolyte at low temperature. Examples of the saturated chain carbonate compound include dimethyl carbonate, ethyl methyl carbonate, diethyl carbonate, ethyl butyl carbonate, methyl-t-butyl carbonate, diisopropyl carbonate, and t-butyl propyl carbonate. Examples of the chain ether compound or the cyclic ether compound include dimethoxyethane, ethoxymethoxyethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl)ether, propylene glycol bis(trifluoroethyl)ether, ethylene glycol bis(trifluoromethyl)ether, and diethylene glycol bis(trifluoroethyl)ether. Of those, dioxolane is preferred.

The saturated chain ester compound is preferably a monoester compound or a diester compound having 2 to 8 carbon atoms in total in a molecule thereof. Specific examples of the compound include methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl. Of those, methyl formate, ethyl formate, methyl acetate, ethyl acetate, propyl acetate, isobutyl acetate, butyl acetate, methyl propionate, and ethyl propionate are preferred.

Other than the foregoing, for example, acetonitrile, propionitrile, nitromethane, derivatives thereof, and various ionic liquids may each also be used as the organic solvent used for preparation of the non-aqueous electrolyte.

Examples of the polymer to be used in the gel polymer electrolyte include polyethylene oxide, polypropylene oxide, polyvinyl chloride, polyacrylonitrile, polymethyl methacrylate, polyethylene, polyvinylidene fluoride, and polyhexafluoropropylene. Examples of the polymer to be used in the pure polymer electrolyte include polyethylene oxide, polypropylene oxide, and polystyrenesulfonic acid. The blending ratio in the gel electrolyte and a compositing method are not particularly limited, and a known blending ratio and a known compositing method in the technical field may be adopted.

In order to prolong the lifetime of the battery and improve the safety thereof, the non-aqueous electrolyte may further comprise a known additive, such as an electrode film forming agent, an antioxidant, a flame retardant, or an overcharge inhibitor. When the additive is used, the amount of the additive is generally from 0.01 part by mass to 10 parts by mass, preferably from 0.1 part by mass to 5 parts by mass with respect to the entirety of the non-aqueous electrolyte.

The non-aqueous electrolyte secondary battery to which the present invention can be applied may comprise a separator between the positive electrode and the negative electrode. A microporous polymer film generally used for the non-aqueous electrolyte secondary battery may be used as the separator without no particular limitations. Examples of the film include films consisting of polymer compounds containing, as main components, for example, any of polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, polyimide, polyethers, such as polyethylene oxide and polypropylene oxide, various celluloses, such as carboxymethyl cellulose and hydroxypropyl cellulose, and poly(meth)acrylic acid and various esters thereof, derivatives thereof, copolymers thereof, and mixtures thereof. Those films may each be coated with a ceramic material, such as alumina or silica, magnesium oxide, an aramid resin, or polyvinylidene fluoride.

Those films may be used alone or as a multi-layer film in which those films are laminated on each other. Further, various additive may be used in each of those films, and the kind and content thereof are not particularly limited. Of those films, a film consisting of polyethylene, polypropylene, polyvinylidene fluoride, polysulfone, or a mixture thereof is preferably used for the secondary battery to be manufactured by a method of manufacturing the secondary battery. When the non-aqueous solvent electrolyte is the pure polymer electrolyte or the inorganic solid electrolyte, the separator may not be incorporated.

A laminate film or a metal container may be used as an exterior member. The thickness of the exterior member is generally 0.5 mm or less, preferably 0.3 mm or less. Examples of the shape of the exterior member include a flat shape (thin shape), a rectangular shape, a cylindrical shape, a coin shape, and a button shape.

A multi-layer film comprising a metal layer between resin films may be used as the laminate film. The metal layer is preferably an aluminum foil or an aluminum alloy foil for weight saving. For example, a polymer material, such as polypropylene, polyethylene, nylon, or polyethylene terephthalate, may be used as the resin film. The laminate film may be sealed through thermal fusion and formed into the shape of the exterior member.

The metal container may be formed of, for example, stainless steel, aluminum, or an aluminum alloy. The aluminum alloy is preferably an alloy containing an element such as magnesium, zinc, or silicon. When the content of a transition metal, such as iron, copper, nickel, or chromium, in aluminum or the aluminum alloy is set to 1% or less, the long-term reliability and heat dissipation property of the battery under a high-temperature environment can be dramatically improved.

Examples

Now, the present invention is described in more detail by way of the Examples and the Comparative Examples. However, the present invention is not limited to Examples below. "Part(s)" and "%" in the Examples are by mass unless otherwise specified. In addition, in the measurement of an average particle diameter, the measurement was performed with a laser diffraction/scattering particle size distribution analyzer (manufactured by HORIBA, Ltd., model: LA-950V2) through use of water as a dispersing medium.

Raw material PAN mixture: 10 parts by mass of polyacrylonitrile powder (manufactured by Sigma-Aldrich, average particle diameter: 200 $\mu$m, weight average molecular weight: about 150,000) and 30 parts by mass of sulfur powder (manufactured by Sigma-Aldrich, average particle diameter: 200 $\mu$m) were mixed in a mortar, and the mixture was used as a raw material for a sulfur-modified polyacrylonitrile in each of Production Examples 1 to 3.

[Production Example 1]

A sulfur-modified polyacrylonitrile was produced by a method in conformity with Production Examples of JP 2013-054957 A. Specifically, 20 g of the raw material PAN mixture was loaded in a bottomed cylindrical glass tube having an outer diameter of 45 mm and a length of 120 mm, and a silicone plug comprising a gas introduction tube and a gas discharge tube was then installed in an opening of the glass tube. After the air in the inside of the glass tube was replaced with nitrogen, a lower portion of the glass tube was placed in a crucible-type electric furnace, and heated at 400°C for 1 hour while hydrogen sulfide to be generated was removed by introducing nitrogen from the gas introduction tube. A sulfur vapor is refluxed by being condensed at an upper portion or a lid portion of the glass tube. After cooling, an intermediate product was placed in a glass tube oven, and heated at 250°C for 1 hour while being vacuum suctioned, to thereby remove elemental sulfur therefrom. The resultant sulfur-modified product was pulverized with a ball mill, and coarse particles were then removed therefrom with a sieve having an opening of 40 $\mu$m. Thus, a sulfur-modified polyacrylonitrile SPAN 1 having an average particle diameter of 10 $\mu$m was obtained.

[Production Example 2]

The same operations as in Production Example 1 were performed except that the elemental sulfur removal conditions for the intermediate product in Production Example 1 were changed from 250°C for 1 hour to 250°C for 2 hours. Thus, a sulfur-modified polyacrylonitrile SPAN 2 having an average particle diameter of 10 $\mu$m was obtained.

[Production Example 3]

The same operations as in Production Example 1 were performed except that the elemental sulfur removal conditions for the intermediate product in Production Example 1 were changed from 250°C for 1 hour to 250°C for 6 hours. Thus, a sulfur-modified polyacrylonitrile SPAN 3 having an average particle diameter of 10 $\mu$m was obtained.

[Production Example 4]

A sulfur-modified polyacrylonitrile was produced by a method in conformity with Example of JP 2014-022123 A. Specifically, there was used a reactor in which a ribbon-type screw having a shaft diameter of 5 mm and a shaft length of 600 mm, and having a screw diameter of 42 mm, a screw length of 450 mm, and a screw pitch of 30 mm was placed in a glass tube made of heat-resistant glass having an outer diameter of 50 mm, an inner diameter of 45 mm, and a length of 500 mm, silicone rubber plugs each having a hole for a screw at a center portion thereof and having a hole for gas introduction or discharge at a position apart from the center portion were installed on both ends of the glass tube, and further, glass thin tubes each made of heat-resistant glass having an outer diameter of 7 mm, an inner diameter of 5 mm, and a length of 100 mm were installed in the hole for gas introduction or discharge of each of the silicone rubber plugs. The reactor was mounted to a tubular electric furnace comprising a portion to be heated of 300 mm, and the electric furnace was inclined so that the reactor had an inclination of 5°. 30 g of the raw material PAN mixture was loaded from an upper portion of the inclined reactor. After the inside of the reactor was replaced with a nitrogen gas, the temperature of the electric furnace was set to 420°C, and the raw material PAN mixture was heated while being rotated at 0.5 revolution per minute. During the heating, a nitrogen gas was fed at a flow rate of 100 ml/min from the glass thin tube at a lower end of the reactor, and a hydrogen sulfide gas to be generated was discharged from the glass thin tube at an upper end thereof. In addition, sulfur having sublimated and adhered to the glass thin tube at the upper end was refluxed by being appropriately heated to be melted.

An intermediate product having passed through the portion to be heated of the reactor was subjected to the same operations as in Production Example 1 after cooling. Thus, a sulfur-modified polyacrylonitrile SPAN 4 having an average particle diameter of 10 μm was obtained.

[Production Example 5]

The same operations as in Production Example 4 were performed except that the elemental sulfur removal conditions for the intermediate product in Production Example 4 were changed from 250°C for 1 hour to 250°C for 2 hours. Thus, a sulfur-modified polyacrylonitrile SPAN 5 having an average particle diameter of 10 μm was obtained.

[Production Example 6]

The same operations as in Production Example 4 were performed except that the elemental sulfur removal conditions for the intermediate product in Production Example 4 were changed from 250°C for 1 hour to 250°C for 6 hours. Thus, a sulfur-modified polyacrylonitrile SPAN 6 having an average particle diameter of 10 μm was obtained.

[Production Example 7]

A center potion of a glass tube made of heat-resistant glass having an outer diameter of 10 mm and an inner diameter of 6 mm was heated to be expanded. Thus, a volumetric pipette-type core tube made of glass comprising an expanded portion having an outer diameter of 30 mm and a length of 50 mm in a center portion thereof and thin tubes each having an outer diameter of 10 mm and a length of 150 mm at both ends thereof was produced.
5 g of the raw material PAN mixture was loaded in the expanded portion of the core tube, and the core tube was arranged so as to have an inclination of 5°. After the inside of the core tube was replaced with a nitrogen gas, the raw material PAN mixture was heated at 400°C for 1 hour while being rotated at 1 revolution per minute. Thus, an intermediate product was obtained. During the heating, a nitrogen gas was fed at a flow rate of 100 ml/min from a lower end of the core tube so that a hydrogen sulfide gas to be generated was able to be discharged from an upper end of the core tube. In addition, while a portion to be heated of the core tube was set to the entirety of the expanded portion, sulfur having sublimated and adhered to a thin tube portion was refluxed to the expanded portion by being appropriately heated to be melted.
The obtained intermediate product was subjected to the same operations as in Production Example 1. Thus, a sulfur-modified polyacrylonitrile SPAN 7 having an average particle diameter of 10 μm was obtained.

[Production Example 8]

The same operations as in Production Example 7 were performed except that the elemental sulfur removal conditions for the intermediate product in Production Example 7 were changed from 250°C for 1 hour to 250°C for 2 hours. Thus, a sulfur-modified polyacrylonitrile SPAN 8 having an average particle diameter of 10 μm was obtained.

[Production Example 9]

The same operations as in Production Example 7 were performed except that the elemental sulfur removal conditions for the intermediate product in Production Example 7 were changed from 250°C for 1 hour to 250°C for 6 hours. Thus, a sulfur-modified polyacrylonitrile SPAN 9 having an average particle diameter of 10 μm was obtained.
The content (mass%) of sulfur and the average CT value of each of SPAN 1 to SPAN 9 were measured by the following methods, and the value for "140×x-y" was calculated. The results are shown in Table 1.

[Content of Sulfur]

The content of sulfur was calculated from the analysis results of analysis of each of SPAN 1 to SPAN 9 with a CHN analyzer (manufactured by Elementar Analysensysteme GmbH, model: varioMICROcube) capable of analyzing sulfur and oxygen.

[Average CT Value]

The CT values of each of SPAN 1 to SPAN 9 were measured with an X-ray CT device (manufactured by Rigaku Corporation, model: CT Lab GX130) under the following conditions. The CT values in a center portion of 10 mm$^2$ of a sample were averaged to provide an average CT value.

Measurement sample: A measurement sample was produced by loading 250 mg of a sample in a circular sample guide having a diameter of 20 mm, and applying a pressure of 30 MPa thereto for 5 minutes.

Tube current: 177 $\mu$A

Tube voltage: 90 kV

Voxel size: 0.09 mm$\times$0.09 mm

Table 1

|  |  | Content of sulfur (mass%) : "x" | Average CT value: "y" | 140$\times$x-y |
|---|---|---|---|---|
| SPAN 1 | Comparative Example 1 | 42.3 | 652 | 5, 270 |
| SPAN 2 | Comparative Example 2 | 38.1 | 44.9 | 5,290 |
| SPAN 3 | Comparative Example 3 | 37.3 | 10.1 | 5,210 |
| SPAN 4 | Example 1 | 42.0 | 1,290 | 4,590 |
| SPAN 5 | Comparative Example 4 | 36.9 | 817 | 4,350 |
| SPAN 6 | Example 2 | 36.2 | 492 | 4,580 |
| SPAN 7 | Example 3 | 42.9 | 1, 130 | 4, 880 |
| SPAN 8 | Example 4 | 38.8 | 622 | 4, 810 |
| SPAN 9 | Example 5 | 37.2 | 310 | 4, 900 |

Out of SPAN 1 to SPAN 9, SPAN 4 and SPAN 6 to SPAN 9 were sulfur-modified polyacrylonitriles satisfying the expression (1), and hence were used as sulfur-modified polyacrylonitriles of Examples 1 to 5, respectively. In addition, SPAN 1 to SPAN 3 and SPAN 5 not satisfying the expression (1) were used as sulfur-modified polyacrylonitriles of Comparative Examples 1 to 4, respectively. In each of Examples 3 to 5 (SPAN 7 to SPAN 9), in which the sulfur-modified polyacrylonitrile was produced by subjecting polyacrylonitrile and sulfur to heat treatment with a rotating-type heating container, the value for "140$\times$x-y" satisfies the expression (2) and the expression (3).

[Production of Electrode]

Electrodes of Examples 6 to 10 and Comparative Examples 5 to 8 were produced by the following method through use of the sulfur-modified polyacrylonitriles of Examples 1 to 5 and Comparative Examples 1 to 4, respectively.
92.0 Parts by mass of the sulfur-modified polyacrylonitrile serving as an electrode active material, 3.5 parts by mass of acetylene black (manufactured by Denka Company Limited) and 1.5 parts by mass of a carbon nanotube (manufactured by Showa Denko K.K., product name: VGCF) serving as conductive assistants, 1.5 parts by mass of a styrene-butadiene rubber (aqueous dispersion, manufactured by Zeon Corporation) and 1.5 parts by mass of carboxymethyl cellulose (manufactured by Daicel Fine Chem Ltd.) serving as binders, and 120 parts by mass of water serving as a solvent were mixed with each other with a rotation/revolution mixer to prepare a slurry. The slurry composition was applied onto a current collector formed of stainless-steel foil (thickness: 20 $\mu$m) by a doctor blade method and dried at 90°C for 3 hours. After that, the electrode was cut into a predetermined size and subjected to vacuum drying at 120°C for 2 hours. Thus, a disc-shaped electrode was produced.

[Production of Positive Electrode 1]

90.0 Parts by mass of Li(Ni$_{1/3}$Co$_{1/3}$Mn$_{1/3}$)O$_2$ (manufactured by Nihon Kagaku Sangyo Co., Ltd., product name: NCM 111, hereinafter referred to as "NCM") serving as a positive electrode active material, 5.0 parts by mass of acetylene black (manufactured by Denka Company Limited) serving as a conductive assistant, and 5.0 parts by mass of polyvinylidene fluoride (manufactured by Kureha Corporation) serving as a binder were mixed and dispersed in 100 parts by mass of N-methylpyrrolidone with a rotation/revolution mixer to prepare a slurry. The slurry composition was applied onto a current collector formed of aluminum foil (thickness: 20 $\mu$m) by a doctor blade method and dried at 90°C for 3 hours. After that, the electrode was cut into a predetermined size and subjected to vacuum drying at 120°C for 2 hours. Thus, a disc-shaped positive electrode 1 was produced.

[Production of Negative Electrode 1]

Metal lithium having a thickness of 500 μm was cut into a predetermined size. Thus, a disc-shaped negative electrode 1 was produced.

[Preparation of Non-aqueous Electrolyte]

An electrolyte solution was prepared by dissolving $LiPF_6$ at a concentration of 1.0 mol/L in a mixed solvent consisting of 50 vol% of ethylene carbonate and 50 vol% of diethyl carbonate.

[Assembly of Battery]

Each of the electrodes of Examples 6 to 10 and Comparative Examples 5 to 8 serving as a positive electrode and the negative electrode 1 serving as a negative electrode were held in a case while a glass filter serving as a separator was sandwiched therebetween. After that, the non-aqueous electrolyte prepared in advance was injected into the case, and the case was hermetically sealed. Thus, a non-aqueous electrolyte secondary battery (a coin-shaped battery having a diameter of φ20 mm and a thickness of 3.2 mm) of each of Examples 1 to 15 and Comparative Examples 9 to 12 was produced. In addition, the positive electrode 1 serving as a positive electrode and each of the electrodes of Examples 6 to 10 and Comparative Examples 5 to 8 serving as a negative electrode were held in a case while a glass filter serving as a separator was sandwiched therebetween. After that, the non-aqueous electrolyte prepared in advance was injected into the case, and the case was hermetically sealed. Thus, a non-aqueous electrolyte secondary battery (a coin-shaped battery having a diameter of φ20 mm and a thickness of 3.2 mm) of each of Examples 16 to 20 and Comparative Examples 13 to 16 was produced.

[Charge-discharge Test Method]

The non-aqueous electrolyte secondary battery was placed in a constant-temperature bath at 30°C, and subjected to a total of 10 cycles of charging and discharging in which a charge final voltage and a discharge final voltage were set to 3.0 V and 1.0 V, respectively, that is, 5 cycles of charging and discharging at a charge rate of 0.1 C and a discharge rate of 0.1 C and then 5 cycles of charging and discharging at a charge rate of 0.1 C and a discharge rate of 2 C. The charge capacity and the discharge capacity (unit: mAh/g) were measured at each cycle, and a ratio of the discharge capacity at the tenth cycle to the discharge capacity at the fifth cycle was used as a capacity retention rate (%). A higher capacity retention rate in this test indicates more excellent rate characteristics because the discharge rate in this test is 0.1 C from the first cycle to the fifth cycle and 2 C from the sixth cycle to the tenth cycle. The results of Examples 11 to 15 and Comparative Examples 9 to 12 are shown in Table 2, and the results of Examples 16 to 20 and Comparative Examples 13 to 16 are shown in Table 3.

Table 2

|  | Positive electrode (electrode active material) | Negative electrode | Discharge capacity (mAh/g) | Capacity retention rate (%) |
|---|---|---|---|---|
| Example 11 | Example 6 (Example 1) | Negative electrode 1 | 596 | 77 |
| Example 12 | Example 7 (Example 2) | Negative electrode 1 | 510 | 78 |
| Example 13 | Example 8 (Example 3) | Negative electrode 1 | 604 | 80 |
| Example 14 | Example 9 (Example 4) | Negative electrode 1 | 552 | 82 |
| Example 15 | Example 10 (Example 5) | Negative electrode 1 | 526 | 82 |
| Comparative Example 9 | Comparative Example 5 (Comparative Example 1) | Negative electrode 1 | 590 | 73 |

(continued)

|  | Positive electrode (electrode active material) | Negative electrode | Discharge capacity (mAh/g) | Capacity retention rate (%) |
|---|---|---|---|---|
| Comparative Example 10 | Comparative Example 6 (Comparative Example 2) | Negative electrode 1 | 538 | 72 |
| Comparative Example 11 | Comparative Example 7 (Comparative Example 3) | Negative electrode 1 | 520 | 71 |
| Comparative Example 12 | Comparative Example 8 (Comparative Example 4) | Negative electrode 1 | 535 | 72 |

Table 3

|  | Positive electrode (positive electrode active material) | Negative electrode (electrode active material) | Discharge capacity (mAh/g) | Capacity retention rate (%) |
|---|---|---|---|---|
| Example 16 | Positive electrode 1 (NMC) | Example 6 (Example 1) | 595 | 77 |
| Example 17 | Positive electrode 1 (NMC) | Example 7 (Example 2) | 507 | 79 |
| Example 18 | Positive electrode 1 (NMC) | Example 8 (Example 3) | 602 | 81 |
| Example 19 | Positive electrode 1 (NMC) | Example 9 (Example 4) | 550 | 83 |
| Example 20 | Positive electrode 1 (NMC) | Example 10 (Example 5) | 524 | 83 |
| Comparative Example 13 | Positive electrode 1 (NMC) | Comparative Example 5 (Comparative Example 1) | 593 | 73 |
| Comparative Example 14 | Positive electrode 1 (NMC) | Comparative Example 6 (Comparative Example 2) | 536 | 74 |
| Comparative Example 15 | Positive electrode 1 (NMC) | Comparative Example 7 (Comparative Example 3) | 525 | 72 |
| Comparative Example 16 | Positive electrode 1 (NMC) | Comparative Example 8 (Comparative Example 4) | 538 | 73 |

It is found that each of the electrodes of Examples 6 to 10, in which the sulfur-modified polyacrylonitriles of Examples 1 to 5 satisfying the expression (1) were used as the electrode active materials, respectively, has a higher capacity retention rate and is thus more excellent in rate characteristics than each of the electrodes of Comparative Examples 5 to 8, in which the sulfur-modified polyacrylonitriles of Comparative Examples 1 to 4 not satisfying the expression (1) were used as the electrode active materials, respectively, regardless of whether the electrode is used as the negative electrode or the positive electrode. Of those, the electrodes of Examples 8 to 10, in which the sulfur-modified polyacrylonitriles of Examples 3 to 5 (SPAN 7 to SPAN 9) obtained by subjecting polyacrylonitrile and sulfur to heat treatment with a rotating-type heating container were used, respectively, each have a high capacity retention rate.

**Claims**

1.  A sulfur-modified polyacrylonitrile, which has a content of sulfur of from 30 mass% to 50 mass%, and satisfies the following expression (1) when the content (mass%) of sulfur is represented by "x", and an average CT value of the sulfur-modified polyacrylonitrile in X-ray CT is represented by "y".

$$4,500 < 140 \times x - y < 5,200 \qquad (1)$$

2.  An electrode for a non-aqueous electrolyte secondary battery, comprising the sulfur-modified polyacrylonitrile of claim 1 as an electrode active material.

3. A non-aqueous electrolyte secondary battery, comprising the electrode for a non-aqueous electrolyte secondary battery of claim 2 as a positive electrode.

4. A non-aqueous electrolyte secondary battery, comprising the electrode for a non-aqueous electrolyte secondary battery of claim 2 as a negative electrode.

5. A method of selecting a sulfur-modified polyacrylonitrile, comprising the steps of:

   measuring a sulfur-modified polyacrylonitrile for a content of sulfur and an X-ray CT value; and
   selecting, as an electrode active material of an electrode for a non-aqueous electrolyte secondary battery, a sulfur-modified polyacrylonitrile having a value for "x" of from 30 to 50 and satisfying the following expression (1) when the content (mass%) of sulfur is represented by "x", and an average CT value in the X-ray CT is represented by "y".

$$4,500 < 140 \times x - y < 5,200 \qquad (1)$$

6. A method of examining performance of a sulfur-modified polyacrylonitrile as an electrode active material of an electrode for a non-aqueous electrolyte secondary battery, comprising the steps of:

   measuring a sulfur-modified polyacrylonitrile for a content of sulfur and an X-ray CT value; and
   determining whether or not a value for "x" is from 30 to 50 and a value for "y" satisfies the following expression (1) when the content (mass%) of sulfur is represented by "x", and an average CT value in the X-ray CT is represented by "y".

$$4,500 < 140 \times x - y < 5,200 \qquad (1)$$

7. A method of manufacturing an electrode for a non-aqueous electrolyte secondary battery, comprising:

   a step of measuring a sulfur-modified polyacrylonitrile for a content of sulfur and an X-ray CT value;
   an examination step of determining whether or not a value for "x" is from 30 to 50 and a value for "y" satisfies the following expression (1) when the content (mass%) of sulfur is represented by "x" and an average CT value in the X-ray CT is represented by "y"; and
   a step of using a sulfur-modified polyacrylonitrile having passed the examination step as an electrode active material of an electrode for a non-aqueous electrolyte secondary battery.

$$4,500 < 140 \times x - y < 5,200 \qquad (1)$$

| | INTERNATIONAL SEARCH REPORT | International application No. |
|---|---|---|
| | | PCT/JP2020/034673 |

A. CLASSIFICATION OF SUBJECT MATTER
Int.Cl. C08C19/20(2006.01)i, H01M4/60(2006.01)i
FI: H01M4/60, C08C19/20

According to International Patent Classification (IPC) or to both national classification and IPC

B. FIELDS SEARCHED

Minimum documentation searched (classification system followed by classification symbols)
Int.Cl. C08C19/20, H01M4/60

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)
JSTPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| X<br>A | JP 2014-022123 A (NATIONAL INSTITUTE OF ADVANCED INDUSTRIAL SCIENCE & TECHNOLOGY; TAKASAGO IND CO., LTD.) 03 February 2014 (2014-02-03), examples | 1-3<br>4-7 |
| A | JP 2017-218584 A (ADEKA CORPORATION) 14 December 2017 (2017-12-14), claims | 1-7 |
| A | WO 2010/044437 A1 (NATIONAL INSTITUTE OF ADVANCED INDUSTRIAL SCIENCE & TECHNOLOGY, TOYOTA INDUSTRIES CORPORATION) 22 April 2010 (2010-04-22), claims | 1-7 |
| A | WO 2019/181703 A1 (ADEKA CORPORATION) 26 September 2019 (2019-09-26), claims | 1-7 |
| A | JP 2014-096326 A (TOYOTA INDUSTRIES CORPORATION, NATIONAL INSTITUTE OF ADVANCED INDUSTRIAL SCIENCE & TECHNOLOGY) 22 May 2014 (2014-05-22), claims, examples | 1-7 |

☒ Further documents are listed in the continuation of Box C.          ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 13 November 2020 | 01 December 2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2020/034673 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | WO 2016/009936 A1 (TORAY INDUSTRIES, INC.) 21 January 2016 (2016-01-21), claims, examples | 1-7 |
| A | JP 2001-203003 A (TOYOTA CENTRAL R&D LABS., INC.; TOYOTA MOTOR CORPORATION) 27 July 2001 (2001-07-27), claims | 1-7 |

Form PCT/ISA/210 (second sheet) (January 2015)

<table>
<tr><td colspan="2" align="center">**INTERNATIONAL SEARCH REPORT**<br>Information on patent family members</td><td colspan="2">International application No.<br>PCT/JP2020/034673</td></tr>
<tr><td>JP 2014-022123 A</td><td>03 February 2014</td><td colspan="2">(Family: none)</td></tr>
<tr><td>JP 2017-218584 A</td><td>14 December 2017</td><td colspan="2">(Family: none)</td></tr>
<tr><td>WO 2010/044437 A1</td><td>22 April 2010</td><td colspan="2">US 2011/0200875 A1<br>claims<br>EP 2337126 A1</td></tr>
<tr><td>WO 2019/181703 A1</td><td>26 September 2019</td><td colspan="2">TW 201941484 A</td></tr>
<tr><td>JP 2014-096326 A</td><td>22 May 2014</td><td colspan="2">US 2014/0134485 A1<br>claims, examples</td></tr>
<tr><td>WO 2016/009936 A1</td><td>21 January 2016</td><td colspan="2">US 2017/0133667 A1<br>claims, examples<br>EP 3171430 A1</td></tr>
<tr><td>JP 2001-203003 A</td><td>27 July 2001</td><td colspan="2">(Family: none)</td></tr>
</table>

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010044437 A1
- JP 2014022123 A
- JP 2014096327 A
- JP 2008277031 A
- JP 2013054957 A